(19) Europäisches Patentamt
European Patent Office
Office européen des brevets

(11) **EP 4 368 581 A1**

(12) **EUROPEAN PATENT APPLICATION**

(43) Date of publication:
**15.05.2024 Bulletin 2024/20**

(21) Application number: **22315267.9**

(22) Date of filing: **09.11.2022**

(51) International Patent Classification (IPC):
**C02F 1/00** (2023.01)     **C02F 1/68** (2023.01)
**C02F 1/42** (2023.01)     **C02F 103/02** (2006.01)

(52) Cooperative Patent Classification (CPC):
**C02F 1/008; C02F 1/42; C02F 1/68;**
C02F 2001/425; C02F 2103/02; C02F 2201/005;
C02F 2201/006; C02F 2209/003; C02F 2209/005;
C02F 2209/05; C02F 2301/043; C02F 2305/14;
C02F 2307/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Compagnie Gervais Danone
75009 Paris (FR)**

(72) Inventors:
• **Di Gioia, Lodovico**
  **91300 MASSY (FR)**
• **Jacob, Paul**
  **91300 MASSY (FR)**
• **Dessauge, Lucas**
  **91300 MASSY (FR)**

(74) Representative: **Regimbeau
20, rue de Chazelles
75847 Paris Cedex 17 (FR)**

(54) **SYSTEM FOR MODIFYING THE MINERALITY OF AN AQUEOUS LIQUID**

(57)     A system (1) comprising: a tank (2) for storing an aqueous liquid; an outlet (16) for delivering the aqueous liquid; a minerality modifying device (12); a circuit (18) able to be set in: a bypass mode wherein the circuit forms a first path bypassing the minerality modifying device (12) and in a processing mode wherein the circuit forms a second path passing through the minerality modifying device (12); a sensing system (50) for sensing values of a physical property of the aqueous liquid; a controller (56) for setting the circuit (18) selectively in the processing mode and in the bypass mode on the basis of the values and a target value of the physical property, such that a predefined volume of the aqueous liquid reaching the outlet has an average value of the physical property corresponding to the target value.

Fig. 1

## Description

### TECHNICAL FIELD

The present disclosure relates to a system for treating and dispensing an aqueous liquid.

### BACKGROUND

Known water treatment systems include a minerality modifying device. The minerality modifying device actually changes the amount and/or the type of minerals in the water before the water is dispensed to a user so as to change or improve the taste of the dispensed water.

However, minerality modifying devices wear out over time. The more a minerality modifying device is used, the less it changes the taste of incoming water. At some point, the minerality modifying device needs to be replaced.

### SUMMARY

A goal of the present disclosure is to propose a system that controls the taste of an aqueous liquid to be provided to a user in a more accurate manner.

This goal is achieved by the system of claim 1. This system comprises:

- a tank for storing an aqueous liquid,
- an outlet for delivering the aqueous liquid,
- a minerality modifying device (12),
- a circuit able to be set in:

    ○ a bypass mode wherein the circuit forms a first path fluidically connecting the tank to the outlet and bypassing the minerality modifying device, and circulates the aqueous liquid in the first path such that the aqueous liquid is not processed by the minerality modifying device, and in
    ○ a processing mode wherein the circuit forms a second path fluidically connecting the tank to the outlet, the second path passing through the minerality modifying device, and circulates the aqueous liquid in the second path such that the aqueous liquid is processed by the minerality modifying device before reaching the outlet,

- a sensing system configured to sense:

    o a first value of a physical property of the aqueous liquid as not processed by the minerality modifying device, wherein the physical property is related to an amount of minerals in the aqueous liquid,
    o a second value of the physical property of the aqueous liquid after the aqueous liquid has been processed by the minerality modifying device,

- a controller configured to set the circuit selectively in the processing mode and in the bypass mode on the basis of the first value, the second value and a target value of the physical property, such that a predefined volume of the aqueous liquid stored in the tank reaches the outlet, and such that the predefined volume has an average value of the physical property corresponding to the target value.

Optional features of the system are detailed in the dependent claims and below.

Preferably, the sensing system comprises a sensor arranged downstream the minerality modifying device and so as to sequentially sense the first value and the second value.

Preferably, the controller is configured to cause the circuit to alternate between the processing position and the bypass position at least two times while circulating the predefined volume of the aqueous liquid from the tank to the outlet.

Preferably, the controller is configured to compute a bypass ratio b as follows:

$$b = \frac{X_{target} - X_{outlet}}{X_{feed} - X_{outlet}}$$

wherein $X_{feed}$ is the first value, $X_{outlet}$ is the second value and $X_{target}$ is the target value, and the predefined volume of the aqueous liquid reaching the outlet consists of:

- a first volume of the aqueous liquid having flowed in the first path and proportional to b, and
- a second volume of the aqueous liquid having flowed in the second path and proportional to 1-b.

Preferably, the controller is configured to set the circuit in the bypass mode for a first duration proportional to b, and in the processing mode for a second duration proportional to 1-b.

Preferably, the controller is configured to raise an alarm whenever the bypass ratio b is below a predefined threshold.

Preferably, the circuit is configured to circulates the aqueous liquid in the first path at a constant flowrate.

Preferably, the controller is configured to raise an alarm whenever a gap between the first value and the second value is below a predefined threshold.

Preferably, the controller is configured to compute the target value from the first value.

Preferably, the circuit comprises:

- a first line which bypasses the minerality modifying device,
- a first valve able to open and close the bypass line,
- a second line including the minerality modifying device,
- a second valve able to open and close the second line,

wherein:

- one of the first valve and the second valve is an active valve configured to be opened and closed by the controller, and
- the other of the first valve and the second valve is a passive valve configured to open whenever a pressure applied on the passive valve by aqueous liquid coming from the tank exceeds a threshold, and to close otherwise.

Preferably, the active valve is the first valve; and the passive valve is the second valve.
Preferably, the passive valve is a check valve.
Preferably, the system comprises a removable cartridge, wherein the removable cartridge comprises the minerality modifying device.
Preferably, at least one of the active valve and the passive valve is outside the removable cartridge.
Preferably, the minerality processing device comprises a demineralizer.
Preferably, the demineralizer comprises a dealkalization resin arranged to capture calcium and magnesium cations associated with bicarbonate anions.
Preferably, the system further comprises a mineralizer. The mineralizer may be arranged in the first path, in the second path or in both paths.
Preferably, the demineralizer is configured to decrease a pH of the aqueous liquid, and the mineralizer is arranged downstream the demineralizer and is configured to mineralize the aqueous liquid only if the pH of the aqueous liquid is lower than a threshold.
Preferably, the mineralizer stores a solid mineral arranged to dissolve in the aqueous liquid when the aqueous liquid flows through the mineralizer, thereby mineralizing the aqueous liquid.
Preferably, the system further comprises a purifier configured to purify an aqueous liquid flowing in the first path and/or in the second path.
Preferably, the purifier comprises at least one of the following components:

- an activated carbon,
- an ion exchange resin or adsorption media or chelating media,
- a microfilter,
- a UV light configured to irradiate the aqueous liquid with an UV radiation, the UV radiation preferably having a wavelength in the range going from 230 to 290 nanometers.

## BRIEF DESCRIPTION OF THE FIGURES

Further details, features and advantages are explained in more detail below with the aid of. exemplary embodiments that are illustrated in the figures.

Figure 1 is a schematic representation of a system according to a first embodiment.

Figure 2 shows the system according to the first embodiment while a circuit thereof is set in a bypass mode.

Figure 3 shows the system according to the first embodiment while a circuit thereof is set in a processing mode.

Figure 4 is a schematic representation of a system according to a second embodiment.

Figure 5 is a schematic representation of a system according to a third embodiment.

Figure 6 shows steps of a rinsing method according to an embodiment.

Figure 7 shows steps of method of dispensing a predefined volume of aqueous liquid to a user, according to an embodiment.

Figure 8a is a schematic representation of a predefined volume of aqueous liquid in a container, after this predefined volume has been dispensed by means of a method according to a first embodiment.

Figure 8b is a schematic representation of a predefined volume of aqueous liquid in a container, after this predefined volume has been dispensed by means of a method according to a second embodiment.

## DETAILED DESCRIPTION OF EMBODIMENTS

### 1) Definitions

In the present disclosure, "purifying" an aqueous liquid means removing at least one contaminant from the aqueous liquid. The amount of contaminants in a purified aqueous liquid shall be lower than the amount of contaminants in the aqueous liquid before purification. In other words, a purification may be partial. Examples of contaminants removed by the purifier are: heavy metals such as lead (Pb), chlorine and disinfection byproducts such as trihalomethanes, volatile organic compounds such as odours, organic compounds such as pesticides pharmaceuticals, endocrine disruptors and microorganisms such as pathogenic protozoa, bacteria, viruses.
In the present disclosure, a "mineral" is defined as any cation selected in the group consisting of Ca, Mg, Na and K and any anion selected in the group consisting in bicarbonates, Cl and $SO_4$.
In the present disclosure, a treatment "substantially" modifying the amount of minerals of any aqueous liquid is defined as a treatment which would increase or decrease the conductivity of a reference aqueous liquid by more than 10 %, the reference aqueous liquid having a conductivity equal to 595 µS/cm at 25°C before treatment.

In contrast, a treatment which does not "substantially" modify an amount of minerals of any aqueous liquid is defined in the present disclosure as a treatment which would increase or decrease the conductivity of a reference aqueous liquid by no more than 10 %, the reference aqueous liquid having a conductivity equal to 595 µS/cm at 25°C before treatment.

To check whether a treatment "substantially" modifies or not an amount of minerals in any aqueous liquid, the following protocol can be implemented.

- A reference aqueous liquid is stored in a first tank at 25°C. The first tank is for instance a beaker of 50 mL.
- A conductivity $\chi_1$ of the reference aqueous liquid in the first tank is measured using a measurement system. For example, the measurement system comprises a conductivity probe (WTW TetraCon 925 IDS) coupled with a conductivity meter (WTW Multi 3620 IDS). The reference aqueous liquid is selected such that $\chi_1$ is equal to 595 µS/cm. An example of reference aqueous liquid is for example the Evian natural mineral water, which has the following mineral composition:

  o Calcium: 80 mg/L
  o Magnesium: 26 mg/L
  o Potassium 1 mg/L
  o Sodium 6,5 mg/L
  o Bicarbonates 360 mg/L
  o Nitrates 3,8 mg/L

- Then, the reference aqueous liquid is inputted in a device implementing the treatment to be checked.
- After being treated by said device, the reference aqueous liquid outputted by the device is collected in a second tank at 25 °C. The second tank is for example a beaker of 50 mL.
- A second conductivity $\chi_2$ of the reference aqueous liquid in the second tank is measured using the same measurement system.
- If $\dfrac{|\chi_2 - \chi_1|}{\chi_1} > 0.1$ then the treatment is regarded as a treatment which "substantially" modifies the amount of minerals of any aqueous liquid.
- If $\dfrac{|\chi_2 - \chi_1|}{\chi_1} \leq 0.1$ then the treatment is a treatment is regarded as a treatment which does not "substantially" modify the amount of minerals of any aqueous liquid.

In the present disclosure, "demineralizing" an aqueous liquid is defined as a treatment which decreases the conductivity of the aqueous liquid.

In contrast, "mineralizing" an aqueous liquid is defined in the present disclosure as a treatment which increases the conductivity of the aqueous liquid.

## 2) Systems for dispensing an aqueous liquid

### 2.1) First embodiment

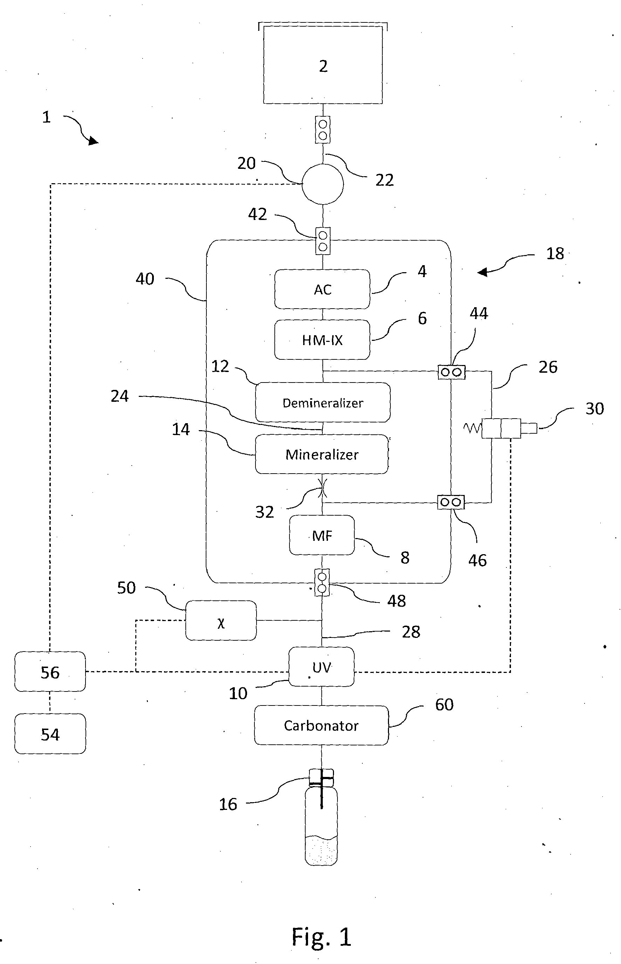

Referring to **figure 1**, a system 1 according to a first embodiment comprises a tank 2 and components through which an aqueous liquid can flow, including: at least one purifier 4, 6, 8, 10, at least one minerality modifying device 12, 14 and an outlet 16. The system 1 further comprises a circuit 18 fluidically interconnecting components 2, 4, 6, 8, 10, 12, 14, 16.

### Tank / outlet

The tank 2 is designed to store an aqueous liquid. The tank 2 includes an inlet for feeding the tank 2 with aqueous liquid, coming for instance from a tap. The inlet may be closed by a cover or any other suitable closing means.

The tank 2 is preferably a removable element, which may be removed from the system 1 in order to be filled with aqueous liquid away from the system, then put back in the system 1 once it has been filled.

The outlet 16 is designed to output an aqueous liquid out of the system 1. It is used to dispense an aqueous liquid stored in the tank 2 to a user. The outlet 16 may comprise a connector adapted to be releasably and mechanically coupled with an external container, such as a decanter. For instance, the connector includes a thread adapted to be coupled with a neck of the external container.

### Purifier(s)

Each purifier of the system 1 is a device configured to purify an aqueous liquid without substantially modifying an amount of minerals of the aqueous liquid. The system 1 according to the first embodiment actually comprises several purifiers 4, 6, 8, 10 carrying out this function but having different structures.

A first purifier 4 of the system 1 is an activated carbon (AC). The AC may be configured to remove at least one of the following contaminants from the aqueous liquid: chlorine, at least one disinfection by-product, at least one VOC, at least one organic pollutant, at least one heavy metal. The activated carbon is granular (GAC). Alternatively, the activated carbon could be in the form of a felt or pellets or carbon block.

A second purifier 6 of the system 1 is an ion exchange resin or adsorption media or chelating media (HM-IX). The second purifier 6 may be configured to remove at least one of the following contaminants from the aqueous liquid: at least one heavy metal, at least one microbiological contaminant. The second purifier 8 is arranged downstream the first purifier 4.

A third purifier 8 of the system 1 is a microfilter (MF). The microfilter is configured to capture particles present in the aqueous liquid and/or released by at least one other purifier, such as the first purifier 4 and the second purifier 6. The microfilter MF may be replaced by an ultrafilter (UF). The third purifier 8 is arranged downstream the second purifier 6.

A fourth purifier 10 of the system 1 is a UV light configured to irradiate the aqueous liquid with a UV radiation, the UV radiation preferably having a wavelength in the range going from 230 to 290 nanometers. The fourth purifier 10 is arranged downstream the third purifier 8.

In accordance with the definition provided above, any of the purifiers 4, 6, 8, 10 is configured to increase or decrease the conductivity of a reference aqueous liquid by no more than 10 %, the reference aqueous liquid having a conductivity equal to 595 $\mu$S/cm at 25°C before purification. Preferably, the purification system 103 is configured to increase or decrease the conductivity of the reference aqueous liquid as described above by no more than 5 %.

**Minerality modifying device(s)**

Each minerality modifying device 12, 14 of the system 1 is configured to modify an amount of minerals of an aqueous liquid. The amount of minerals may be modified in two different ways: it may be decreased or increased. Consequently, the conductivity of an aqueous liquid is increased or decreased by each minerality modifying device 12, 14.

A first minerality modifying device of the system 1 according to the first embodiment is a demineralizer 12. In accordance with the definition provided above, the demineralizer 12 is configured to decrease the conductivity of an aqueous liquid.

The demineralizer 12 may be further configured to decrease the pH of the aqueous liquid. In other words, an aqueous liquid flowing through the demineralizer 12 is acidified and demineralized.

The demineralizer 12 may comprise a dealkalization resin arranged to capture calcium and magnesium cations associated with bicarbonate anions, such as a weak acid cation resin (WAC). The dealkalization resin does not require a waste line in contrast with a reverse osmosis (RO) system. Therefore, using the dealkalization resin instead of a reverse osmosis system for demineralizing an aqueous liquid avoids wasting water.

Alternatively, the demineralizer may comprise a decationization resin or a combination of decationization and deanionization resin, such as strong acid cation (SAC) resin, a weak base anion resin (WBA) or a strong base anion resin (SBA). Such resins may also be combined and arranged in any order, to capture calcium and magnesium cations associated with bicarbonate anions or all cations and some or all anions.

A second minerality modifying device of the system 1 is a mineralizer 14. In accordance with the definition provided above, the mineralizer 14 is configured to increase the conductivity of an aqueous liquid.

The mineralizer 14 may be configured to increase the amount of minerals in an aqueous liquid (and its conductivity) only if the aqueous liquid has a pH lower than a threshold. For example, the mineralizer 14 may increase the amount of minerals in an aqueous liquid only if the aqueous liquid is acidic (in this case the pH threshold is below 7).

The mineralizer 14 may be a solid mineralizer, i.e. stores a solid mineral arranged to dissolve when an aqueous liquid is flowing through the solid mineralizer 14, thereby mineralizing said aqueous liquid. This dissolution occurs only if the aqueous liquid has a pH lower than the above-mentioned threshold. In the case of some solid minerals like MgO, minerals may be released regardless of the pH to create alkaline water.

**Circuit**

The circuit 18 comprises a collection of pipes interconnecting the different components of the system 1.

The circuit 18 further comprises a pump 20 configured to circulate the aqueous liquid, so that the aqueous liquid can reach and be treated by the different components of the system 1. When the pump 20 is switched off, any aqueous liquid present in the system 1 stagnates.

Preferably, the pump 20 is configured to pump liquid from the tank 2 at a constant flowrate.

The circuit 18 comprises an input line 22, a minerality modifying line 24, a bypass line 26 and an output line 28.

The input line 22 includes the tank 2, the first purifier 4 and the second purifier 6 arranged in series, in that order. Fewer purifiers may be included in the input line 22, and their order may be different. Purifiers 4 and 6 can also be mixed. In addition, the pump 20 is included in the input line 22, for example between the tank 2 and the first purifier 4 as shown in figure 1.

The minerality modifying line 24 is arranged downstream the input line 22. The minerality modifying line 24 includes the minerality modifying devices 12, 14.

The bypass line 26 is also arranged downstream the input line 22. The bypass line 26 bypasses the minerality modifying devices 12, 14.

The minerality modifying line 24 and the bypass line 26 are both fluidically connected to the input line 22 at a splitting point, and are both fluidically connected to the output line 28 at a junction point downstream the splitting point. In the embodiment shown in figure 1, the splitting point is located between the purifier 6 and the demineralizer 12, and the junction point is located between the mineralizer 14 and the purifier 8.

The output line 28 is arranged downstream the minerality modifying line 24 and downstream the bypass line 26. The output line 28 extends from the junction point to the outlet 16. The output line 28 includes purifier 8, 10.

The circuit 18 further comprises a valve assembly for selecting one of the minerality modifying line 24 and of the bypass line 26. The purpose of the valve assembly is to ensure aqueous liquid coming from the tank 2 and reaching the outlet 16 has flowed through only one of the minerality modifying line 24 and the bypass line 26. The valve assembly prevents mixture of aqueous liquid flowing in the minerality modifying line 24 and aqueous liquid flowing in the bypass line 26 upstream the outlet 16.

In the embodiment shown in figure 1, the valve assembly comprises a first valve 30 and a second valve 32.

The first valve 30 is arranged in the bypass line 26, between the splitting point and the junction point. The first valve 30 is able to be set in two positions:

- an open position allowing an aqueous liquid coming from the tank 2 and flowing in the bypass line 26 to reach the output line 28.
- a closed position that closes the bypass line 26, thereby preventing an aqueous liquid coming from the tank 2 and flowing in the bypass line 26 (from the splitting point to the junction point) to reach the output line 28.

The first valve 30 is an active valve. This means that a controller (described later) can set the first valve in the open position or in the closed position by sending appropriate control signals.

The second valve 32 is arranged in the minerality modifying line 24, between the splitting point and the junction point. More precisely, the second valve 32 is arranged downstream the minerality modifying devices 12, 14 and upstream the junction point. The check valve 32 is able to be set in two positions:

- an open position allowing an aqueous liquid coming from the tank 2 and flowing in the minerality modifying line 24 to reach the output line 28.
- a closed position that closes the minerality modifying line 24, thereby preventing an aqueous liquid coming from the tank 2 and processed by any of the minerality modifying devices 12, 14 to reach the output line 28.

The second valve 32 is a passive valve. The passive valve is not designed to be controlled remotely using control signals. The passive valve 32 is configured to open whenever a pressure applied on the passive valve 32 by aqueous liquid coming from the tank 2 exceeds a threshold, and to close otherwise, i.e. whenever a pressure applied on the passive valve by aqueous liquid coming from the tank 2 does not exceed the threshold (in particular, when no pressure is applied on the passive valve by an aqueous liquid coming from the tank 2).

The second valve 32 is a check valve. Thus, the second valve prevents aqueous liquid to flow backwards, i.e. towards the tank whatever the pressure applied on the second valve by aqueous liquid in a backward direction (from the outlet 16 towards the tank 2).

**Removable cartridge**

The system 1 further comprises a cartridge 40 constituting an item which can be removed from the system 1 and replaced by another cartridge in the system 1. The cartridge 40 comprises at least one purifier of the system 1 and at least one minerality modifying device of the system 1.

In the first embodiment shown in figure 1, the cartridge 40 comprises purifiers 4, 6, 8 and the minerality modifying devices 12, 14. The cartridge 40 also includes the second valve 32.

The cartridge 40 does not comprise the other components of the system 1 described above. In particular, the cartridge 40 does not include the first valve 30. This is advantageous in that it makes the cartridge 40 cheaper.

The cartridge 40 comprises a first inlet 42 for inputting the aqueous liquid into the cartridge 40, a first outlet 44 for outputting the aqueous liquid outside the cartridge 40, a second inlet 46 for inputting the aqueous liquid into the cartridge 40, and a second outlet 48 for outputting the aqueous liquid outside the cartridge.

The cartridge 40 comprises a portion of the input line 22, a portion of the output line 28, the minerality modifying line 24, a first portion of the bypass line 26 and a second portion of the bypass line 26. The cartridge 40 further comprises the splitting point and the junction point described above.

The portion of the input line 22 included in the cartridge 40 extends from the first inlet 42 to the splitting point and includes purifiers 4, 6.

The first portion of the bypass line 26 included in the cartridge 40 extends from the splitting point to the first outlet 44. The second portion of the bypass line 26 included in the cartridge 40 extends from the second inlet 46 to the junction point.

The portion of the output line 28 included in the cartridge 40 extends from the junction point to the second outlet 16, and includes the purifier 8.

Other components

The system 1 further comprises a sensing system 50 configured to sense a first value of a physical property of an aqueous liquid as not processed by any of the minerality modifying devices 12, 14 of the system 1, and to sense a second value of the physical property of the aqueous liquid once the aqueous liquid has been processed by the minerality modifying devices 12, 14. The physical property is related to the amount of minerals of the aqueous liquid. In other words, a change in the amount of minerals in the aqueous liquid will cause a change of the physical property sensed by the sensing system 50. Thus, the first value and the second value of the physical property are different when the minerality modifying device works properly.

The sensing system 50 is configured to sense:

- a first physical property of an aqueous liquid as not processed by any of the minerality modifying devices 12, 14 of the system 1, and
- a second physical of the aqueous liquid once the aqueous liquid has been processed by the minerality modifying devices 12, 14.

In a preferred embodiment that will be detailed below, the physical property is the conductivity of the aqueous liquid. However, other physical properties may be sensed by the sensing system 50 in replacement of the conductivity, such as a conductance or a resistivity of the aqueous liquid.

In the first embodiment shown in figure 1, the sensing system is a single sensor arranged downstream the minerality modifying devices 12, 14. More precisely, the sensor 50 is arranged to sense the physical property of aqueous liquid flowing in the output line 28. The system 1 further comprises a carbonator 60 configured to carbonate the aqueous liquid reaching the outlet 16. The carbonator 60 may comprise a carbonation source storing carbon dioxide and a carbonation valve controlling an amount of carbon dioxide stored in the carbonation tank to be mixed with aqueous liquid dispensed to a user via the outlet 16. The carbonator 60 may further comprise a carbon dioxide vent/drain and/or an air vent/drain designed to reduce pressure in a container mechanically coupled with the outlet 16, and corresponding valves for controlling the vents or drains. The carbonator 60 may further comprise means for preventing back pressure into upstream parts of the circuit 18. Said means comprise for example a one-way valve between the UV and carbonator 60.

In an embodiment, the carbonator 60 is configured to carbonate the aqueous liquid flowing in the output line 24, before reaching the outlet 16. In another embodiment, the carbonator 60 is configured to carbonate an aqueous liquid stored in a container, after the aqueous liquid has reached the outlet 16. To that end, the carbonator 60 injects carbon dioxide in the output line 24 such that the carbon dioxide reaches the outlet 16 then the container in which the aqueous liquid has been collected.

The system 1 further comprises a user interface 54 allowing a user to interact with the system 1. In particular, the user interface is able to detect that the user requests some of the aqueous liquid present in the system 1.

The system 1 further comprises a controller 56 configured to receive data from the sensor 50 and from the user interface. The controller 56 is further configured to control the valve assembly and the pump 20. The controller 56 comprises or is coupled to a memory able to store data, including data computed by the controller 56 and data sensed by the sensing system 50. In figure 1, communication lines between the controller and the sensor 50, the pump 20, and valve 30, 32 are represented by dashed lines.

## Functioning modes of the circuit

A function performed by the circuit 18 is controlling the circulation of an aqueous liquid from the tank 2 to the outlet 16.

The circuit 18 is configurable in different modes implementing different interconnections between some of the components listed above.

### Idle mode

The circuit 18 is able to be set in an idle mode wherein the aqueous liquid stagnates at least in the tank 2. The aqueous liquid is prevented by the circuit 18 to reach the outlet 16.

In the embodiment shown in figure 1, the idle mode is obtained as follows:

- the active valve 30 is closed,
- the pump 20 is turned off.

### Bypass mode

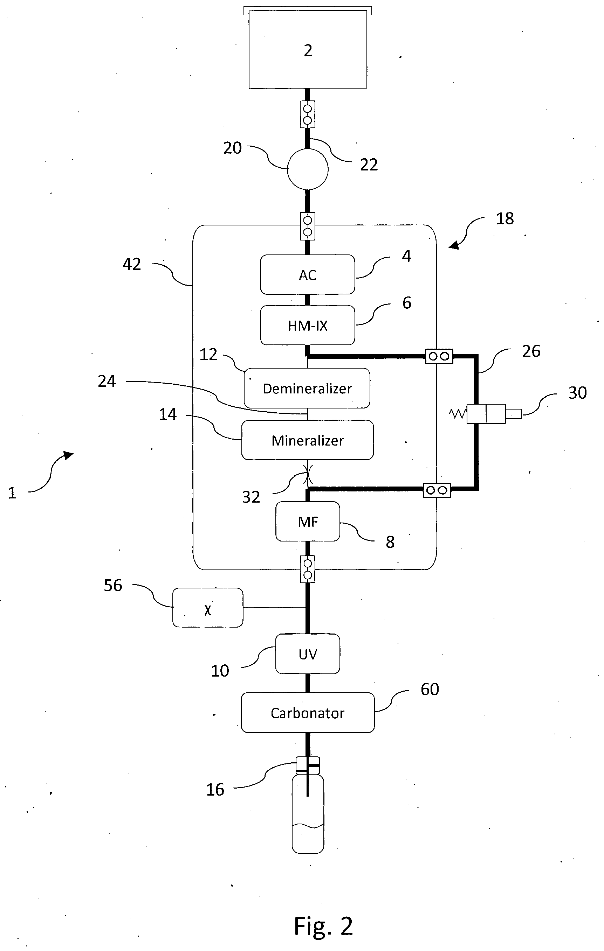

The circuit 18 is able to be set in a bypass mode wherein the circuit forms a first path fluidically connecting the tank 2 to the outlet 16 and bypassing the minerality modifying devices, and wherein the circuit 18 circulates the aqueous liquid in the first path such that the aqueous liquid is not processed by any minerality modifying device of the system 1 before reaching the outlet 16 (and exiting the system 1). The first path is shown in **figure 2** by a bold line.

In the first embodiment shown in figure 2, the bypass mode is obtained as follows:

- the active valve 30 is opened,
- the pump 20 is turned on.

The first path is actually formed by the input line 22, the bypass line 26 and the output line 28.

When set in the bypass mode, the circuit 18 circulates some of the aqueous liquid stored in the tank 2 to the outlet 16 at a first flowrate. The aqueous liquid flows in the input line 22, then in the bypass line 26, then in the output line 28. Since the aqueous is free to flow in the bypass line, the pressure applied by the aqueous liquid coming from the tank 2 on the check valve 32 is low, thus the check valve 32 remains closed. The first flowrate is constant in the first path because the minerality modifying line 24 remains closed by the check valve 32.

When flowing in the first path, the aqueous liquid flows through the following components, in that order before reaching the outlet 16: the first purifier 4, the second purifier 6, the third purifier 8, the fourth purifier 10, and the carbonator 60. The aqueous liquid bypasses the minerality modifying devices 12, 14; therefore, the minerality of the aqueous liquid is not substantially modified by the system 1.

**Processing mode**

The circuit 18 is able to be set in a processing mode wherein the circuit forms a second path fluidically connecting the tank 2 to the outlet 16 and passing through the minerality modifying devices 12, 14, and wherein the circuit 18 circulates the aqueous liquid in the second path such that the aqueous liquid is processed by the minerality modifying devices 12, 14 before reaching the outlet 16.

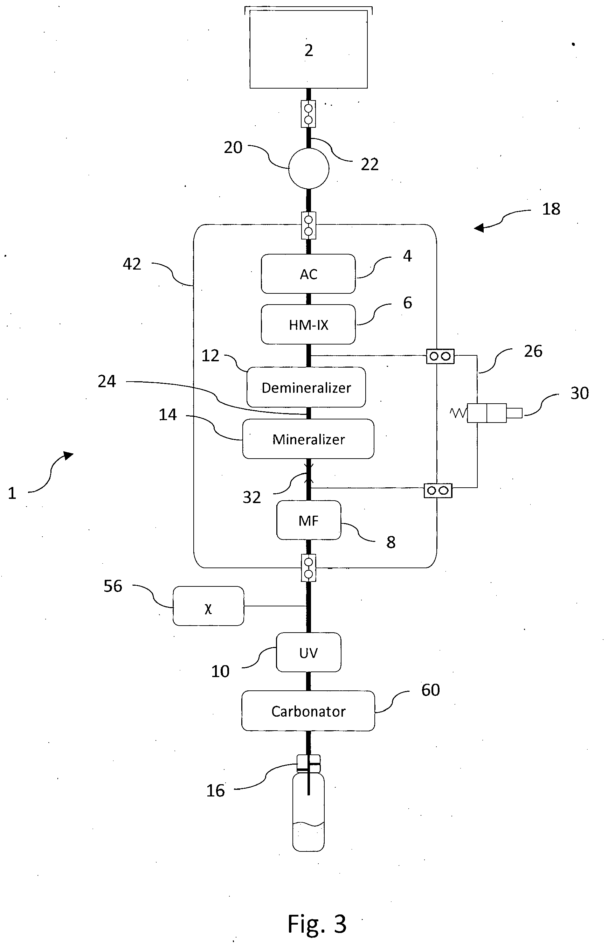

The second path is shown in figure 3 by a bold line.

In the first embodiment shown in figure 1, the processing mode is obtained as follows:

- the active valve 30 is closed,
- the pump 20 is turned on.

The second path closed loop is actually formed by the input line 22, the minerality modifying line 24 and the output line 28.

When the circuit 18 is set in the processing mode, some of the aqueous liquid stored in the tank 2 flows through the input line 22, then through the minerality processing line 24, then through the output line 28 at a second flowrate. The check valve 32 opens because of the pressure applied thereon by the aqueous liquid. This is due to the fact that the bypass line 26 is closed by the active valve 30. The second flowrate is constant in the second path. The second flowrate may be equal to the first flowrate or not.

When flowing in the second path, the aqueous liquid flows through the following components, in that order before reaching the outlet 16: the first purifier 4, the second purifier 6, the demineralizer 12, the mineralizer 14, the third purifier 8, the fourth purifier 10, and the carbonator 60. When the aqueous liquid passes through the minerality modifying devices 12, 14, the minerality of the aqueous liquid is substantially modified. In particular, the conductivity of the aqueous liquid is substantially modified. The amount of minerals of the aqueous liquid flowing in the second path is decreased by the demineralizer 12, then increased by the mineralizer 14.

**2.2) Second embodiment**

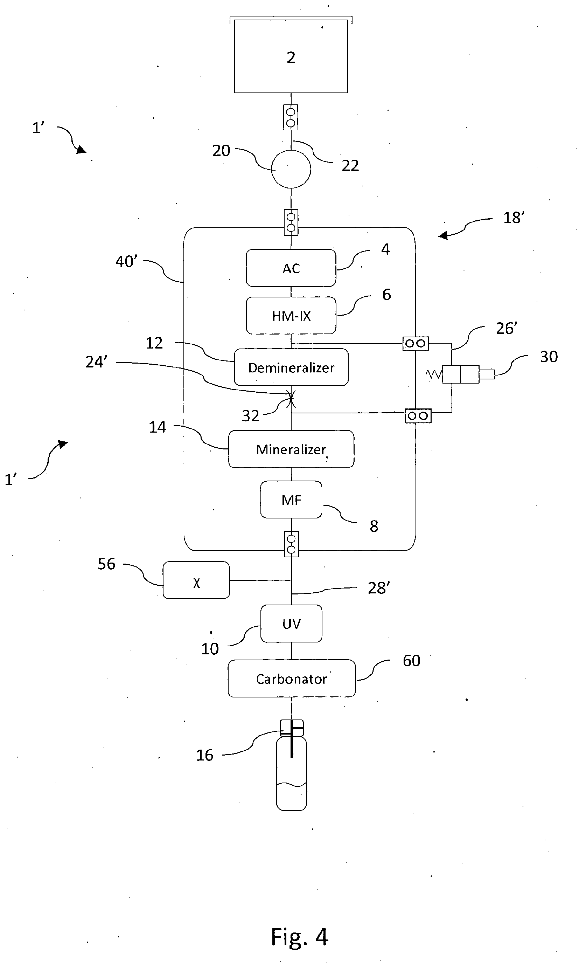

A system 1' according to a second embodiment is shown in **figure 4**. The system 1' has numerous components in common with system 1 (designated by the same reference numerals), including components 2, 4, 6, 8, 10, 12, 14, 16, 20, 30, 60. The user interface 54 and the controller 56 are included as well in system 1", although not illustrated for the sake of clarity.

The system 1' comprises a circuit 18' which differs from the circuit 18 of the system 1 by the fact that the mineralizer 14 is not located in the minerality modifying line 24', but in the output line 28'. Besides, the bypass line 26' differs from bypass line 26 in that the junction point is arranged downstream the demineralizer 12 and upstream the mineralizer 14.

Like circuit 18, the circuit 18' is able to be set in:

- a bypass mode wherein the circuit 18' forms a first path fluidically connecting the tank 2 to the outlet 16 and bypassing the minerality modifying devices, and wherein the circuit 18' circulates the aqueous liquid in the first path such that the aqueous liquid is not processed by any minerality modifying device of the system 1 before reaching the outlet 16, and
- in a processing mode wherein the circuit 18' forms a second path fluidically connecting the tank 2 to the outlet 16 and passing through the minerality modifying devices 12, 14, and wherein the circuit 18' circulates the aqueous liquid in the second path such that the aqueous liquid is processed by the minerality modifying devices 12, 14 before reaching the outlet 16.

In summary, system 1' has the same functioning modes than system 1 except that in the bypass mode of system 1', only demineralizer 12 is bypassed. An aqueous liquid is processed by the mineralizer 14 both in the bypass mode and in the processing mode of system 1'.

**2.3) Third embodiment**

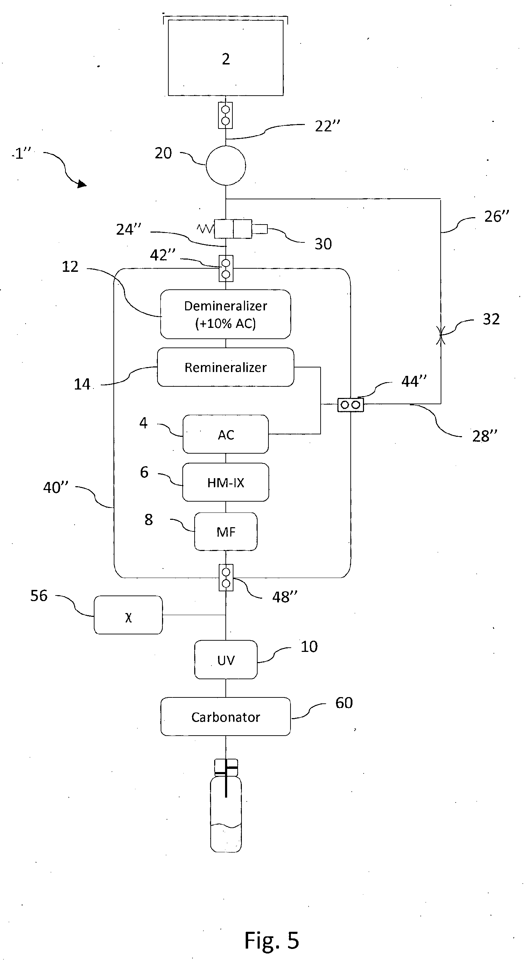

A system 1" according to a third embodiment is shown in **figure 5**. The system 1" has numerous components in common with system 1 (designated by the same reference numerals), including components 2, 4, 6, 8, 10, 12, 14, 16, 20, 30, 60. The user interface 54 and the controller 56 are included as well in system 1", although not illustrated for the sake of clarity.

The system 1" comprises a circuit 18" different from circuit 18. Circuit 18" comprises an input line 22", a minerality modifying line 24", a bypass line 26" and an output line 28".

The input line 22" includes the tank 2 and the pump 20.

The minerality modifying line 24" is arranged downstream the input line 22". The minerality modifying line 24" includes the minerality modifying devices 12, 14, like the minerality modifying line 24" of system 1.

The bypass line 26" is also arranged downstream the input line 22". The bypass line 26" bypasses the minerality modifying devices 12, 14.

The minerality modifying line 24" and the bypass line 26" are both fluidically connected to the input line 22" at a splitting point, and are both fluidically connected to the output line 28" at a junction point downstream the splitting point. The splitting point is located between the pump 20 and the demineralizer 12, and the junction point is located between the pump 20 and the purifier 2.

The output line 28" is arranged downstream the minerality modifying line 24" and downstream the bypass line 26". The output line 28" extends from the junction point to the outlet 16. The output line 28" includes the purifiers 4, 6, 8, 10 (in that order).

The circuit 18" further comprises a valve assembly for selecting one of the minerality modifying line 24" and of the bypass line 26", i.e. playing the same function than the valve assembly of circuit 18.

The valve assembly of system 1" comprises valves 30, 32 already described above. However, in system 1", the check valve 32 is arranged in the bypass line 26", and the active valve 30 is arranged in the minerality modifying line 24", unlike system 1.

Like circuits 18 and 18', the circuit 18" is able to be set in:

- a bypass mode wherein the circuit 18" forms a first path fluidically connecting the tank 2 to the outlet 16 and bypassing the minerality modifying devices, and wherein the circuit 18" circulates the aqueous liquid in the first path such that the aqueous liquid is not processed by any minerality modifying device of the system 1 before reaching the outlet 16, and

- in a processing mode wherein the circuit 18" forms a second path fluidically connecting the tank 2 to the outlet 16 and passing through the minerality modifying devices 12, 14, and wherein the circuit 18" circulates the aqueous liquid in the second path such that the aqueous liquid is processed by the minerality modifying devices 12, 14 before reaching the outlet 16.

In system 1", the bypass mode is obtained by closing the active valve 30 and turning the pump 30 on. The first path is actually formed by the input line 22", the bypass line 26" and the output line 28". When set in the bypass mode, the circuit 18" circulates some of the aqueous liquid stored in the tank 2 to the outlet 16 at a first flowrate. The aqueous liquid flows in the input line 22", then in the bypass line 26", then in the output line 28". The first flowrate is constant in the first path because the minerality modifying line 24 remains closed by the active valve 30. The check valve 32 opens because of the pressure applied thereon by the aqueous liquid. This is due to the fact that the minerality modifying line 24" is closed by the active valve 30. The second flowrate is constant in the second path. The second flowrate may be equal to the first flowrate or not. When flowing in the first path, the aqueous liquid flows through the following components, in that order before reaching the outlet 16: the first purifier 4, the second purifier 6, the third purifier 8, the fourth purifier 10, and the carbonator 60. The aqueous liquid bypasses the minerality modifying devices 12, 14; therefore, the minerality of the aqueous liquid is not substantially modified by the system 1.

In system 1", the processing mode is obtained as follows by opening the active valve 30 and the pump 20 is turned on. The second path closed loop is actually formed by the input line 22", the minerality modifying line 24" and the output line 28". When the circuit 18" is set in the processing mode, some of the aqueous liquid stored in the tank 2 flows through the input line 22", then through the minerality processing line 24", then through the output line 28" at a second flowrate. The second flowrate is constant in the second path. The second flowrate may be equal to the first flowrate or not. When flowing in the second path, the aqueous liquid flows through the following components, in that order before reaching the outlet 16: the demineralizer 12, the mineralizer 14, the first purifier 4, the second purifier 6, the third purifier 8, the fourth purifier 10, and the carbonator 60. When the aqueous liquid passes through the minerality modifying devices 12, 14, the minerality of the aqueous liquid is substantially modified. In particular, the conductivity of the aqueous liquid is substantially modified. The amount of minerals of the aqueous liquid flowing in the second path is decreased by the demineralizer 12, then increased by the mineralizer 14.

In summary, system 1" has the same functioning modes than system 1 except that circuit 18" can be set in the processing mode by opening valve 30, and set in the bypass mode by closing valve 30.

The system 1" further comprises a cartridge 40" constituting an item which can be removed from the system 1" and replaced by another cartridge in the system 1". The cartridge 40" comprises at least one purifier of the system 1" and at least one minerality modifying device of the system 1".

In the first embodiment shown in figure 5, the cartridge 40" comprises purifiers 4, 6, 8 and the minerality modifying devices 12, 14.

The cartridge 40" does not comprise the other components of the system 1 described above. In particular, the cartridge 40" does not include the first valve 30. This is advantageous in that it makes the cartridge 40" cheaper. The cartridge 40" does not comprise the splitting point.

The cartridge 40" comprises a first inlet 42" for inputting the aqueous liquid into the cartridge 40, a second inlet 44" for outputting the aqueous liquid outside the cartridge 40, and an outlet 48" for outputting the aqueous liquid outside the cartridge 40".

The cartridge 40" further comprises the junction point discussed above.

The cartridge 40" comprises a portion of the minerality modifying line 24", said portion extending from the inlet 42" to the junction point, and including the devices 12, 14. The cartridge 40" further comprises a portion of the bypass line 26", said portion extending from the inlet 44" to the junction point. The cartridge 40" further comprises a portion of the output line 28", said portion extending from the junction point to the outlet 48", and including purifiers 4, 6, 8.

## 2.4) Other embodiments

The present disclosure is not limited to the systems 1, 1', 1". Said systems may be modified as followed:

- The mineralizer 14 may be arranged downstream a bypass return line (depending on the type of minerals used therein).
- The first purifier 4, the second purifier 6 and the demineralizer 12 may be gathered in a single block.
- An additional purifier of AC type may be arranged upstream the purifier 8 comprising a microfilter.
- The further purifier 10 (UV light) is optional, as well as the carbonator 60.
- The solid mineralizer 14 can be replaced by a liquid mineralizer. This liquid mineralizer may be part of a second cartridge different from the cartridge 40 including the demineralizer 12.
- In any of the systems 1,1' and 1", the positions of valves 30, 32 can be reversed. In other words, the active valve 30 may located in the bypass line while the passive valve 32 may be located in the minerality modifying line, or the active valve 30 may located in the minerality modifying line while the passive valve 32 may be located in the bypass line. In both cases, the passive valve 32 will open automatically under the effect of a pressure once the active valve is closed.
- The valve assembly may comprise other types of valves (for example two active valves controlled by the controller 56 in a synchronized manner, such that one of them is open while the other is closed.
- The valve assembly may consist in a single 3-way valve arranged at the splitting point or at the junction point.
- The sensing system 50 can comprise two different sensors arranged at different locations for sensing the first conductivity and the second conductivity, respectively.

## 3) Rinsing method

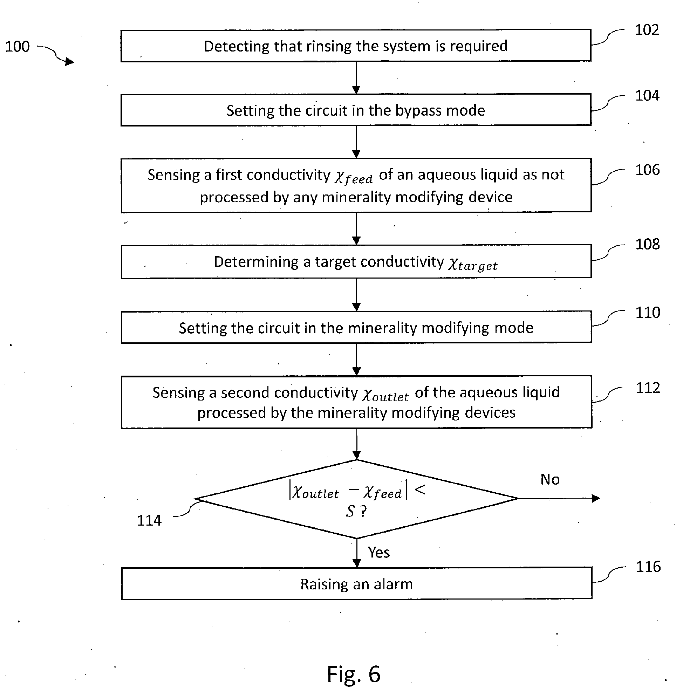

Referring to **figure 6**, a rinsing method 100 performed by the system 1 comprises the following steps. This method can be performed as well by the other systems described above, including systems 1' and 1".

It is supposed that the tank 2 has been filled with a volume of aqueous liquid, for example 2 L of tap water. Besides, a container such as a decanter has been placed by a user at the outlet 16 (as shown in figures 1-5).

In a step 102, the controller 56 detects that the system 1 has to be rinsed. For that purpose, the controller 56 may detect at least one of the following events:

- The system 1 has been powered on,
- a new cartridge 40 has been installed in the system 1,
- the tank 2 has been removed then placed back in the system 1,
- a user has requested a rinsing by means of the user interface.

In a step 104, the controller 56 sets the circuit 18 in the bypass mode by sending appropriate commands to the pump 20 and to the valve assembly. The controller 56 causes the pump 20 to circulate in the first path a small volume of the aqueous liquid stored in the tank 2, for instance 0.1 L.

While the circuit 18 is in the bypass mode, the sensing system 50 senses a first conductivity $X_{feed}$ of the aqueous liquid flowing in the first path (step 106). The first conductivity is therefore the conductivity of the aqueous liquid as not processed by any of the minerality modifying devices 12, 14 of the system 1. The sensor 50 sends the first conductivity to the controller 56.

In a step 108, the controller 56 determines a target conductivity $\chi_{target}$.

In an embodiment, the controller 56 computes the target conductivity $\chi_{target}$ at step 108 from the first conductivity $\chi_{feed}$. For example, the target conductivity may be computed as the first conductivity $\chi_{feed}$ multiplied by a predefined coefficient lower than 1. For example, when this predefined coefficient is 0.5, the target conductivity $\chi_{target}$ is 50% of the first conductivity $\chi_{feed}$. In another embodiment, the target conductivity $\chi_{blend}$ is known in advance and stored in a memory of the system 1. In this case the controller 56 merely loads the target conductivity $\chi_{target}$ from the memory.

In a step 110, the controller 56 sets the circuit 18 in the processing mode by sending appropriate commands to the pump 20 and to the valve assembly. The controller 56 causes the pump 20 to circulate in the second path another volume of the aqueous liquid stored in the tank 2. This volume of aqueous liquid is adapted to ensure that the minerality modifying devices 12, 14 are flushed.

While the circuit 18 is in the processing mode, the sensing system 50 senses a second conductivity $\chi_{outlet}$ of the aqueous liquid flowing in second first path (step 112). The second conductivity $\chi_{outlet}$ is the conductivity of the aqueous liquid as processed by the minerality modifying devices 12, 14 of the system 1. The sensor 50 sends the second conductivity to the controller 56.

During step 112, the sensing system 50 may actually sense a sequence of conductivity values of the aqueous liquid flowing in the second path, and select a value of the sequence as the second conductivity value only if said value is close enough to a preceding value or to a next value of the sequence. In other words, the sensing system 50 waits for the conductivity of the aqueous liquid flowing in the second path to become stable. The sensor 50 sends the second conductivity to the controller 56.

In a step 114, the controller 56 compares the first conductivity and the second conductivity. If a gap between the first conductivity and the second conductivity is below a predefined threshold S, then the controller 56 raises an alarm. In fact, this situation reveals that the minerality modifying devices 12, 14 are not working properly. The alarm may be sent to the user interface, such that the user is notified. The user may be invited to replace the cartridge 40 installed in the system 1 by a brand new one, by means of an appropriate message displayed by the user interface.

#### 4) Dispensing methods

#### 4.1) First embodiment

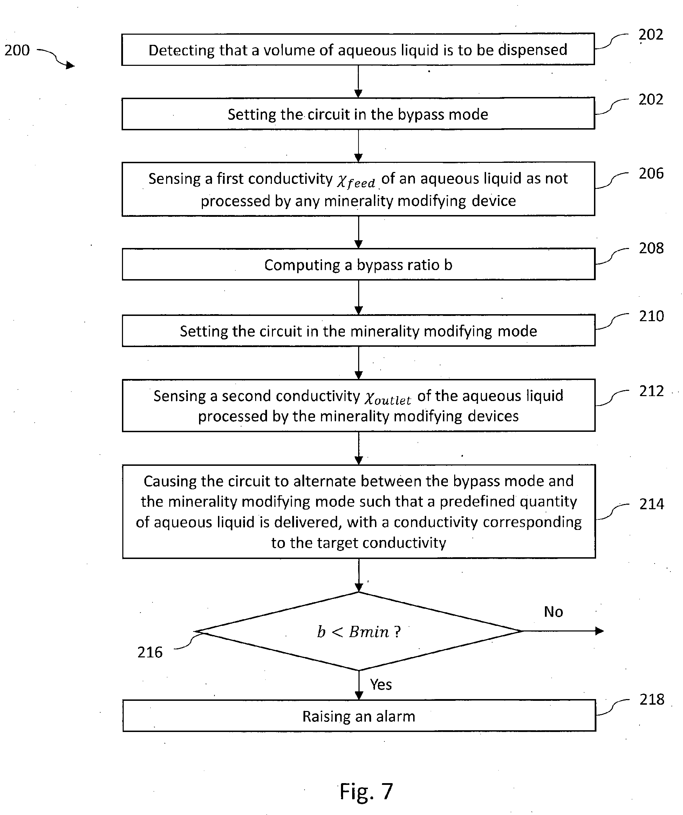

Now turning to figure 7, a method 200 of dispensing an aqueous liquid to a user according to a first embodiment comprises the following steps performed by system 1. Of course, this method 200 can be performed as well by the other systems described above, including systems 1' and 1".

It is supposed that the tank 2 has been filled with a volume of aqueous liquid, for example 2 L of tap water. Besides, a container such as a decanter has been placed by a user downstream the outlet 16 (as shown in figures 1-5).

In a step 202, the controller 56 detects that a predefined volume of the aqueous liquid stored in the tank has to be dispensed to a user. In practice, the controller 56 may detect that a user has requested this by means of the user interface 54. The predefined volume may be selected by the user or set by the controller 56.

In a step 204, the controller 56 sets the circuit 18 in the bypass mode by sending appropriate commands to the pump 20 and to the valve assembly 30, 32. Step 204 is similar to step 104. A small amount of the aqueous liquid stored in the tank 2 flows in the first path, reaches the outlet 16 and is received by the container. This aqueous liquid has not been processed by any of the minerality modifying devices 12, 14 since it does not come from the minerality modifying line 24..

While the circuit 18 is in the bypass mode, the sensing system 50 senses the first conductivity $\chi_{feed}$ of the aqueous liquid flowing in the first path (step 206). Step 206 is similar to step 106. The conductivity value sensed at step 206 is saved in the memory of the controller 56 in replacement of any prior value for $\chi_{feed}$ (in particular any value obtained at step 106).

In a step 208, the controller 56 computes a bypass ratio b from the first conductivity $\chi_{feed}$ and the second conductivity $\chi_{outlet}$ which are stored in the memory thereof. The bypass ratio b is computed by the controller 56 as follows:

$$b = \frac{\chi_{target} - \chi_{outlet}}{\chi_{feed} - \chi_{outlet}}$$

The bypass ratio b is saved in the memory of the controller 56.

In a step 210, the controller 56 sets the circuit 18 in the processing mode by sending appropriate commands to the pump 20 and to the valve assembly. Step 210 is similar to step 110.

While the circuit 18 is in the processing mode, the sensing system 50 senses a second conductivity $\chi_{outlet}$ of the aqueous liquid flowing in second path (step 212). The second conductivity $\chi_{outlet}$ is the conductivity of the aqueous liquid as processed by the minerality modifying devices 12, 14 of the system 1. The sensing system 50 sends the second conductivity to the controller 56, and replaces any prior value of $\chi_{outlet}$ in the memory of the controller 56. In other words, the conductivity $\chi_{outlet}$ in the memory is updated with the value sensed at step 212.

Then, at step 214, the controller 56 may cause the circuit 18 to alternate between the bypass mode and the processing mode until the predefined volume of aqueous liquid reaches the outlet and is received in the container. The controller 56 takes into account the volumes of aqueous liquid already delivered at steps 202 and 210. Once this volume has been delivered, the controller 56 sets the circuit 18 in the idle mode.

The predefined volume reaching the outlet 16 during steps 202, 210 and 214 consists of:

- a first volume of aqueous liquid which flowed in the first path (while the circuit was in the bypass mode). This first volume was not processed by any of the minerality modifying devices 12, 14.
- a second volume of aqueous liquid which flowed in the second path (while the circuit was in the processing mode). This second volume was processed by the minerality modifying devices 12, 14.

It is to be noted that the controller 56 causes the circuit 18 to alternate between the bypass mode and the processing mode such that the predefined volume of the aqueous liquid which is delivered and received in the contained has an average conductivity corresponding to the target conductivity.

To fulfil this condition, the controller 56 ensures that the first volume is proportional to b (the first volume includes the volume delivered at step 202), and that the second volume is proportional to 1-b (the second volume includes the volume delivered at step 210).

In a variant, the controller 56 computes the following durations before step 214:

- a first duration during which the circuit is to be kept in the bypass mode, so as to deliver the first volume;

and

- a second duration during which the circuit is to be kept in the processing mode, so as to deliver the second volume.

The first duration and the second duration may be computed by the controller 56 from the following data: the bypass ratio b, the first flowrate (flowrate of the aqueous liquid flowing in the first path while the circuit is in the bypass mode) and the second flowrate (flowrate of the aqueous liquid flowing in the second path while the circuit is set in the processing mode). When the first flowrate and the second flowrate are equal, the first duration is proportional to b, and the second duration is proportional to 1-b.

It is to be noted that the circuit spends some time in the bypass mode at step 202, and spends some time in the processing mode at step 210.

Thus, at step 214, the controller 56 maintains the circuit in the bypass for a duration equal to the first duration minus the duration spent in the bypass mode at step 202, and maintains the circuit 18 in the processing mode for a duration equal to the second duration minus the duration spent in the processing mode at step 210.

The condition above-mentioned (i.e. the average conductivity of the delivered predefined volume of aqueous liquid should correspond to the target conductivity) can be fulfilled differently in other variants of method 200. Rather than computing durations in advance, the controller 56 may sense the first volume and the second volume using a sensor included in the system 1, for example a flowrate sensor. In a variant, the controller 56 keeps the circuit in the bypass mode until it is sensed that the volume of the first volume has reached the outlet 16, and keeps the circuit in the processing mode until it is sensed that the volume of the second volume has reached the outlet 16.

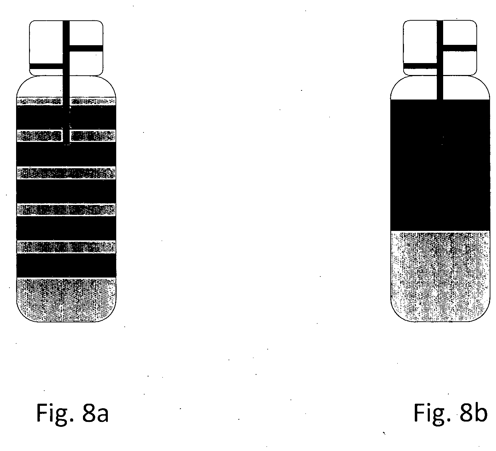

In method 200, the first volume is divided into N first sub-volumes and the second volume is divided into M second sub-volumes, the N first sub-volumes and the M second sub-volumes being delivered by the circuit alternately during distinct time intervals. M or N is at least equal to 2, and M and N are equal or differ by one. To implement this strategy, the controller 56 switches the circuit 18 multiple times between the bypass mode and the processing mode. As a matter of fact, method 200 as shown in figure 7 uses this strategy, since method 200 comprises not only step 214 but also steps 202 and 204. This strategy is illustrated in **figure 8a** showing an example wherein N=6 and M=5. In figure 8a, the first volume (aqueous liquid not processed by any minerality modifying device of the system 1) is represented by six layers colored in light gray. This illustrates that N first sub-volumes are delivered by the circuit during N first time intervals (N=6). The second volume (aqueous liquid processed by the minerality modifying devices of the system 1) is represented by five layers colored in dark gray. This illustrates that M second sub-volumes are delivered by the circuit during M second time intervals interleaved with the first time intervals (M=5).

In summary, the circuit 18 is selectively set by the controller 56 in the processing mode and in the bypass mode multiple times on the basis of the first conductivity, the second conductivity and a target conductivity during method 200, such that the predefined volume of the aqueous liquid stored in the tank reaches the outlet 16, and such that the predefined volume has an average conductivity corresponding to the target conductivity.

The controller 56 preferably alternates between said modes using a frequency adapted to ensure that a previous volume is flushed, thereby allowing the conductivity to be sensed to be stable.

The method 200 further comprises a step 216 wherein the controller compares the computed bypass ratio b with a predefined threshold Bmin. If the bypass ratio b is below the predefined threshold Bmin, then the controller may raise an alarm (step 218). Of course, steps 216, 218 may be performed right after the computation of the bypass ratio at step 208.

The method 200 is particularly advantageous in that it ensures that the aqueous liquid dispensed to the user has a desired taste (reflected by the target conductivity) during the entire lifetime of the minerality modifying devices 12, 14, especially the demineralizer 12. For example, a resin used by the demineralizer can get exhausted, causing the second conductivity to vary over time.

### 4.2) Other embodiments

The system 1 (or other systems like system 1') can perform methods of delivering a predefined volume of aqueous liquid according to other embodiments.

In a method according to a second embodiment, the controller 56 causes the first volume to be delivered by the circuit 18 during a first continuous time period having the first duration, and the second volume to be delivered by the circuit 18 during a second continuous time period having the second duration (M=1, N=1). In this embodiment, the controller 56 changes the mode of the circuit only once. To implement this strategy, step 214 may not be performed. This strategy is illustrated in **figure 8b**. In figure 8b, the first volume (aqueous liquid not processed by any minerality modifying device of the system 1) and the second volume (aqueous liquid processed by the minerality modifying devices of the system 1) are represented by two different layers in the container, with the second volume above the first part.

In this second embodiment, the circuit 18 is selectively set by the controller 56 once in the processing mode and once in the bypass mode on the basis of the first conductivity, the second conductivity and a target conductivity, such that the predefined volume of the aqueous liquid stored in the tank reaches the outlet 16, and such that the predefined volume has an average conductivity corresponding to the target conductivity.

Of course, the methods 100, 200 described above are not limited to embodiments wherein conductivities are sensed by the sensing system 50. Said methods can be generalized to any of the physical properties discussed above related to the amount of minerals in the aqueous liquid.

**Claims**

1. A system (1, 1', 1") comprising:

   • a tank (2) for storing an aqueous liquid,
   • an outlet (16) for delivering the aqueous liquid,
   • a minerality modifying device (12),
   • a circuit (18, 18', 18") able to be set in:

      o a bypass mode wherein the circuit forms a first path fluidically connecting the tank to the outlet (16) and bypassing the minerality modifying device (12), and circulates the aqueous liquid in the first path such that the aqueous liquid is not processed by the minerality modifying device (12), and in
      o a processing mode wherein the circuit forms a second path fluidically connecting the tank to the outlet (16), the second path passing through the minerality modifying device (12), and circulates the aqueous liquid in the second path such that the aqueous liquid is processed by the minerality modifying device (12) before reaching the outlet (16),

   • a sensing system (50) configured to sense:

      ◦ a first value of a physical property of the aqueous liquid as not processed by the minerality modifying device (12), wherein the physical property is related to an amount of minerals in the aqueous liquid,
      ◦ a second value of the physical property of the aqueous liquid after the aqueous liquid has been processed by the minerality modifying device (12),

   • a controller (56) configured to set the circuit (18, 18', 18") selectively in the processing mode and in the bypass mode on the basis of the first value, the second value and a target value of the physical property, such that a predefined volume of the aqueous liquid stored in the tank reaches the outlet (16), and such that the predefined volume has an average value of the physical property corresponding to the target value.

2. The system (1, 1', 1") of the preceding claim, wherein the sensing system comprises a sensor (50) arranged downstream the minerality modifying device (12) and so as to sequentially sense the first value and the second value.

3. The system (1, 1', 1") of any one of the preceding claims, wherein the controller (54) is configured to cause the circuit (18, 18', 18") to alternate between the processing mode and the bypass mode at least two times while circulating the predefined volume of the aqueous liquid from the tank to the outlet (16).

4. The system (1, 1', 1") of any one of the preceding claims, wherein the controller (56) is configured to compute a bypass ratio b as follows:

$$b = \frac{\chi_{target} - \chi_{outlet}}{\chi_{feed} - \chi_{outlet}}$$

wherein $\chi_{feed}$ is the first value, $\chi_{outlet}$ is the second value and $\chi_{target}$ is the target value, and the predefined volume of the aqueous liquid reaching the outlet (16) consists of:

   • a first volume of the aqueous liquid having flowed in the first path and proportional to b, and
   • a second volume of the aqueous liquid having flowed in the second path and proportional to 1-b.

5. The system (1, 1', 1") of the preceding claim, wherein the controller is configured to set the circuit:

   • in the bypass mode for a first duration proportional to b, and
   • in the processing mode for a second duration proportional to 1-b.

6. The system (1, 1', 1") of any one of claims 4 and 5, wherein the controller is configured to raise an alarm whenever the bypass ratio b is below a predefined threshold.

7. The system (1, 1', 1") of any one of the preceding claims, wherein the circuit is configured to circulates the aqueous liquid in the first path at a constant flowrate.

8. The system (1, 1', 1") of any one of the preceding claims, wherein the controller (56) is configured to raise an alarm whenever a gap between the first value and the second value is below a predefined threshold.

9. The system (1, 1', 1") of any one of the preceding claims, wherein the controller is configured to compute the target value from the first value.

**10.** The system (1, 1', 1") of any one of the preceding claims, wherein the circuit comprises: .

> • a first line (26) which bypasses the minerality modifying device (12),
> • a first valve (30, 32) able to open and close the bypass line (26),
> • a second line (24) including the minerality modifying device (12),
> • a second valve (32, 30) able to open and close the second line (24),

wherein:

> • one of the first valve and the second valve is an active valve (30) configured to be opened arid closed by the controller (56), and
> • the other of the first valve and the second valve is a passive valve (32) configured to open whenever a pressure applied on the passive valve by aqueous liquid coming from the tank exceeds a threshold, and to close otherwise.

**11.** The system (1, 1', 1") of the preceding valve, wherein the passive valve (32) is a check valve.

**12.** The system (1, 1', 1") of any one of the preceding claims, further comprising a removable cartridge (40), wherein the removable cartridge (40) comprises the minerality modifying device (12).

**13.** The system (1, 1', 1") of the preceding claim in combination with any one of claims 10 to 11, wherein at least one of the active valve (30) and the passive valve (32) is outside the removable cartridge (40).

**14.** The system (1, 1', 1") of any one of the preceding claims, wherein the minerality processing device comprises a demineralizer (12), wherein the demineralizer preferably comprises a dealkalization resin arranged to capture calcium and magnesium cations associated with bicarbonate anions.

**15.** The system (1, 1', 1") of any one of the preceding claims, further comprising a mineralizer (14) arranged in at least one of the first path and the second path.

Fig. 1

Fig. 2

Fig. 3

**Fig. 4**

Fig. 5

100

102 Detecting that rinsing the system is required

104 Setting the circuit in the bypass mode

106 Sensing a first conductivity $\chi_{feed}$ of an aqueous liquid as not processed by any minerality modifying device

108 Determining a target conductivity $\chi_{target}$

110 Setting the circuit in the minerality modifying mode

112 Sensing a second conductivity $\chi_{outlet}$ of the aqueous liquid processed by the minerality modifying devices

114 $\left| \chi_{outlet} - \chi_{feed} \right| < S\,?$

No

Yes

116 Raising an alarm

Fig. 6

200

Detecting that a volume of aqueous liquid is to be dispensed — 202

Setting the circuit in the bypass mode — 202

Sensing a first conductivity $\chi_{feed}$ of an aqueous liquid as not processed by any minerality modifying device — 206

Computing a bypass ratio b — 208

Setting the circuit in the minerality modifying mode — 210

Sensing a second conductivity $\chi_{outlet}$ of the aqueous liquid processed by the minerality modifying devices — 212

Causing the circuit to alternate between the bypass mode and the minerality modifying mode such that a predefined quantity of aqueous liquid is delivered, with a conductivity corresponding to the target conductivity — 214

$b < Bmin$ ? — 216

No

Yes

Raising an alarm — 218

Fig. 7

Fig. 8a

Fig. 8b

Europäisches
Patentamt

European
Patent Office

Office européen
des brevets

# EUROPEAN SEARCH REPORT

**Application Number**

EP 22 31 5267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/127612 A1 (MITTEMITTE GMBH [DE]) 25 June 2020 (2020-06-25) <br> * page 5, lines 26-32 * <br> * page 6, lines 9-30 * <br> * page 8, lines 10-23 * <br> * page 12, line 8 – page 14, line 31 * <br> * page 15, lines 30-34 * <br> * page 16, line 18 – page 19, line 28; figure 1 * <br> ----- | 1-15 | INV. <br> C02F1/00 <br> C02F1/68 <br><br> ADD. <br> C02F1/42 <br> C02F103/02 |
| X | US 2017/129795 A1 (SINGH VIVEK K N [IN]) 11 May 2017 (2017-05-11) <br> * paragraphs [0002], [0022] – [0034] * <br> * paragraphs [0038] – [0049] * <br> * paragraphs [0050] – [0066]; figure 1 * <br> ----- | 1-15 | |

**TECHNICAL FIELDS SEARCHED (IPC)**

C02F

The present search report has been drawn up for all claims

| Place of search | Date of completion of the search | Examiner |
|---|---|---|
| The Hague | 8 April 2023 | Vaz, Miguel |

EPO FORM 1503 03.82 (P04C01)

## ANNEX TO THE EUROPEAN SEARCH REPORT
## ON EUROPEAN PATENT APPLICATION NO.

EP 22 31 5267

08-04-2023

| Patent document cited in search report | Publication date | Patent family member(s) | Publication date |
|---|---|---|---|
| WO 2020127612 A1 | 25-06-2020 | NONE | |
| US 2017129795 A1 | 11-05-2017 | NONE | |